# EUROPÄISCHE PATENTSCHRIFT

(11) **EP 0 371 304 B1**
(45) Veröffentlichungstag und Bekanntmachung des Hinweises auf die Patenterteilung: **06.10.1993**
(21) Anmeldenummer: 89120964.5
(22) Anmeldetag: 11.11.1989
(51) Int. Cl.: H01J 65/00, H01S 3/02, H01S 3/091

(54) **Hochleistungsstrahler**
High-power radiation device
Dispositif de radiation à haute puissance

(30) Priorität: 01.12.1988 CH 4460/88
(43) Veröffentlichungstag der Anmeldung: 06.06.1990
(73) Patentinhaber: Heraeus Noblelight GmbH, D-63801 Kleinostheim (DE)
(72) Erfinder: Gellert, Bernd, Dr., CH-5430 Wettingen (CH)
(74) Vertreter: Kühn, Hans-Christian

(56) Entgegenhaltungen:
- EP-A- 0 254 111
- US-A- 4 710 679
- APPLIED OPTICS, Band 20, Nr. 6, Seiten 912-913, 15. März 1981; R.M. SCHOTLAND: "Dye lasers: triaxial and quadraxial flashlamp-pumped types compared"

## Beschreibung

### Technisches Gebiet

Die Erfindung betrifft Hochleistungsstrahler insbesondere für sichtbares Licht.
Sie bezieht sich gemäß dem Oberbegriff des Anspruchs 1 auf einen Hochleistungsstrahler mit einem mit Füllgas gefülltem Entladungsraum, wobei das Füllgas unter Einfluss von stillen elektrischen Entladungen Strahlung aussendet, dessen Entladungsraum von Wänden begrenzt ist, von denen die eine durch ein erstes Dielektrikum gebildet ist, welche eine Wand auf ihrer dem Entladungsraum abgewandten Oberfläche mit einer ersten Elektrode versehen ist, die andere Wand des Entladungsraums mit einer zweiten Elektrode versehen ist oder selbst als Elektrode ausgebildet ist, mindestens eine Wand und die ihr zugeordnete Elektrode strahlungsdurchlässig sind und mit einer an die beiden Elektroden angeschlossenen Wechselstromquelle zur Speisung der Entladung.

Die Erfindung nimmt dabei Bezug auf die EP-A-0.254.111 und die CH-A-675504 (= EP-A-0.324.953) der Anmelderin. Anspruch 1 geht von der EP-A-0.254.111 aus.

### Technologischer Hintergrund und Stand der Technik

UV- und VUV-Hochleistungsstrahler des eingangs genannten Typs wurden erstmals im Vortrag von U.Kogelschatz "Neue UV- und VUV-Excimerstrahler" an der 10. Vortragstagung der Gesellschaft Deutscher Chemiker Fachgruppe Photochemie, Würzburg 18.-20. November 1987 der Öffentlichkeit vorgestellt.

Dieser Hochleistungsstrahler kann mit grossen elektrischen Leistungsdichten und hohem Wirkungsgrad betrieben werden. Seine Geometrie ist in weiten Grenzen dem Prozess anpassbar, in welchem er eingesetzt wird. So sind neben grossflächigen ebenen Strahlern auch zylindrische, die nach innen oder nach aussen strahlen, möglich. Die Entladungen können bei hohem Druck 10⁴ - 10⁶ Pa (0.1 - 10 bar) betrieben werden. Mit dieser Bauweise lassen sich elektrische Leistungsdichten von 1 - 50 kW/m² realisieren. Da die Elektronenenergie in der Entladung weitgehend optimiert werden kann, liegt der Wirkungsgrad solcher Strahler sehr hoch, auch dann, wenn man Resonanzlinien geeigneter Atome anregt. Die Wellenlänge der Strahlung lässt sich durch die Art des Füllgases einstellen z.B. Quecksilber (185 nm, 254nm), Stickstoff (337nm-415 nm), Selen (196nm,204nm,206 nm), Arsen (189nm, 193 nm), Jod (183 nm), Xenon (119nm, 130nm, 147 nm), Krypton (142 nm). Wie bei anderen Gasentladungen empfiehlt sich auch die Mischung verschiedener Gasarten.

Der Vorteil dieser Strahler liegt in der flächenhaften Abstrahlung grosser Strahlungsleistungen mit hohem Wirkungsgrad. Fast die gesamte Strahlung ist auf einen oder wenige Wellenlängenbereiche konzentriert. Wichtig ist in allen Fällen, dass die Strahlung durch eine der Elektroden austreten kann. Dieses Problem ist lösbar mit transparenten, elektrisch leitenden Schichten oder aber auch, indem man ein feinmaschiges Drahtnetz oder aufgebrachte Leiterbahnen als Elektrode benützt, die einerseits die Stromzufuhr zum Dielektrikum gewährleisten, andererseits für die Strahlung aber weitgehend transparent sind. Auch kann ein transparenter Elektrolyt, z.B. H₂O, als weitere Elektrode verwendet werden, was insbesondere für die Bestrahlung von Wasser/Abwasser vorteilhaft ist, da auf diese Weise die erzeugte Strahlung unmittelbar in die zu bestrahlende Flüssigkeit gelangt und diese Flüssigkeit gleichzeitig als Kühlmittel dient.

Beschichtet man das Dielektrikum mit einer Lumineszenzschicht, wie es in der eingangs zitierten CH-Patentanmeldung CH-A-675504 vorgeschlagen wird, so erhält man einen Strahler, der sichtbares Licht im Wellenlängengebiet von 400 nm bis 800 nm abgibt.

Die durch Resonanz- oder Excimerstrahlung im Entladungsraum erzeugten UV Photonen bringen beim Aufprallen auf die Schicht diese zum Fluoreszieren oder Phosphoreszieren und erzeugen damit sichtbare Strahlung. Mit modernen Phosphoren kann dieser Umwandlungsprozess in sichtbares Licht sehr effizient sein (Quantenausbeute bis zu 95 %). Mit Vorteil ist die Schicht auf die Innenseite des Dielektrikums aufgebracht, weil dadurch das Dielektrikum selber nur aus gewöhnlichem Glas bestehen kann. Alle Schwierigkeiten, die man im Zusammenhang mit einer UV-Quelle mit UV-durchlässigen Materialien hat, treten dabei nicht auf. Eventuell muss die lumineszierende Schicht mit einer dünnen UV-transparenten Schicht gegen den Angriff der Entladung geschützt werden.

Die gewünschte UV-Wellenlänge kann mit der Gasfüllung ausgewählt werden. Es kommen z.B. Excimere als strahlende Moleküle in Frage (Edelgase, Mischungen von Edelgasen und Halogenen, Quecksilber, Cadmium oder Zink) oder Mischungen von Metallen mit starken Resonanzlinien (Quecksilber, Selen etc.) in ganz kleinen Mengen und Edelgasen, wobei den quecksilberfreien Füllgasen der Vorzug zu geben ist, da hiermit keine Entsorgungsprobleme entstehen. Auf die Weise kann man z.B. einen Quecksilberstrahler bauen mit ähnlichen Eigenschaften, wie derjenige, der der herkömmlichen Fluoreszenz-Röhre und den neuen Gasentladungslampen zugrunde liegt.

### Kurze Darstellung der Erfindung

Der Erfindung liegt die Aufgabe zugrunde, einen Hochleistungsstrahler, insbesondere für sichtbares Licht anzugeben, der effizient ist, von variabler Bauweise (z.B. zu Schriftmustern oder flachen Bildschirmen verkettbar), wirkungsvoll Farbstoffe pumpt und mit verschiedensten zeitlichen Dauern und Frequenzen ein- und ausschaltbar ist.

Diese Aufgabe wird erfindungsgemäss dadurch gelöst, dass der Entladungsraum zumindest auf einer Seite an eine Kammer angrenzt, die mit einem in einem Gas oder einer Flüssigkeit dispergierten, suspendierten oder gelösten Farbstoff erfüllt ist.

Die Erfindung macht sich dabei einen aus der Literatur bekannten Effekt zunutze: Gewisse Farbstoffe (beispielsweise in Methanol gelöst, u.U. auch in Wasser, möglicherweise auch in der gasförmigen Phase) strahlen sehr effizient sichtbares Licht verschiedener Wellenlängen ab, wenn sie mit Licht aus einem anderen Wellenlängenbereich, insbesondere mit UV-Licht bestrahlt ("gepumpt") werden.
Bei der Erfindung erzeugt die stille Entladung, vorzugsweise in einem Excimergemisch, die geeigneten Wellenlängen und kann als Pumplichtquelle auf besonders einfache Art und Weise Farbstoffe pumpen. Damit werden eine Reihe von neuen Anwendungen möglich, bekannte Anwendungen vereinfacht.Zu diesen Anwendungen gehören u.a.:
1. Farbige Emission für Beleuchtungszwecke, Beschriftungen oder auf flachen Bildschirmen;
2. gepulste Farbstofflaser ohne Blitzlampe bzw. ohne Excimerlaser als Pumpquelle;
3. Quasi-CW-Farbstofflaser ohne Blitzlampen

### Kurze Beschreibung der Zeichnung

In der Zeichnung sind Ausführungsbeispiele der Erfindung schematisch dargestellt, und zwar zeigt:
- Fig.1: ein Ausführungsbeispiel der Erfindung in Gestalt eines ebenen einseitig abstrahlenden Flächenstrahlers im Schnitt;
- Fig.2: ein Ausführungsbeispiel eines zylindrischen nach aussen abstrahlenden Strahlers;
- Fig.3: ein Ausführungsbeispiel der Erfindung in Gestalt eines ebenen nach zwei Seiten abstrahlenden Flächenstrahlers mit Elektroden innerhalb des Farbstoffkanals im Schnitt;
- Fig.4: eine Abwandlung des Ausführungsbeispiels nach Fig. 3 mit Elektroden ausserhalb des Farbstoffkanals im Schnitt;
- Fig.5: einen Querschnitt durch die Pumpkammer eines Farbstofflasers
- Fig.6: eine schematische Laseranordnung unter Verwendung einer Pumpkammer gemäss Fig.5.

### Wege zur Ausführung der Erfindung

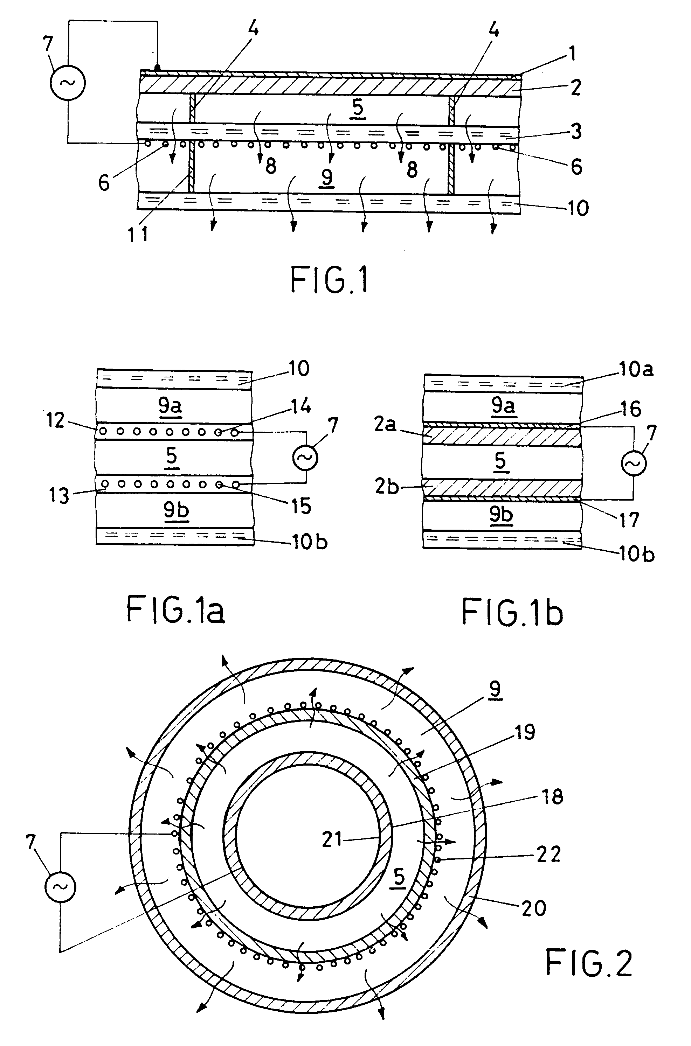

Der einseitig abstrahlende Flächenstrahler nach Fig. 1 umfasst eine äussere Elektrode 1, die auf einer Platte 2 aus dielektrischem Material, z.B. Glas oder Quarz, angeordnet ist. Von dieser Platte 2 beabstandet ist eine weitere Platte 3, z.B. aus Glas. Erste Distanzstücke sind mit 4 bezeichnet. Der Raum zwischen den beiden Platten 2 und 3 bildet den Entladungsraum 5. Die dem Entladungsraum 5 abgewandte Oberfläche der Platte 3 ist mit einer lichtdurchlässigen Elektrode 6 in Gestalt eines Drahtnetzes versehen. Eine Wechselstromquelle mit einstellbarer Frequenz und Amplitude ist an beide Elektroden 1 und 6 angeschlossen.

Die Wechselstromquelle 7 entspricht grundsätzlich jenen, wie sie zur Anspeisung von Ozonerzeugern verwendet werden. Typisch liefert sie eine einstellbare Wechselspannung in der Grössenordnung von mehreren 100 Volt bis 20000 Volt bei Frequenzen im Bereich des technischen Wechselstroms bis hin zu einigen kHz - abhängig von der Elektrodengeometrie, Druck im Entladungsraum und Zusammensetzung des Füllgases.

Der Entladungsraum 5 zwischen den Platten 2 und 3 ist mit einem unter Entladungsbedingungen Strahlung aussendenden Füllgas gefüllt, z.B. Quecksilber, Edelgas, Edelgas-Metalldampf-Gemisch, Edelgas-Halogen-Gemisch, gegebenenfalls unter Verwendung eines zusätzlichen weiteren Edelgases, vorzugsweise Ar, He, Ne, Xe als Puffergas.

Je nach gewünschter spektraler Zusammensetzung der Strahlung kann dabei eine Substanz/Substanzgemisch gemäss nachfolgender Tabelle Verwendung finden:

| Füllgas | Strahlung |
|---|---|
| Helium | 60 - 100 nm |
| Neon | 80 - 90 nm |
| Argon | 107 - 165 nm |
| Argon + Fluor | 180 - 200 nm |
| Argon + Chlor | 165 - 190 nm |
| Argon+Krypton+Chlor | 165 - 190, 200 - 240 nm |
| Xenon | 160 - 190 nm |
| Stickstoff | 337 - 415 nm |
| Krypton | 124, 140 - 160 nm |
| Krypton + Fluor | 240 - 255 nm |
| Krypton + Chlor | 200 - 240 nm |
| Quecksilber | 185, 254, 320 - 360, 390 -420 nm |
| Selen | 196, 204, 206 nm |
| Deuterium | 150 - 250 nm |
| Xenon + Fluor | 400 - 550 nm |
| Xenon + Chlor | 300 - 320 nm |

Daneben kommen eine ganze Reihe weiterer Füllgase in Frage......
- Ein Edelgas (Ar, He, Kr, Ne, Xe) oder Hg mit einem Gas bzw. Dampf aus F₂, J₂, Br₂, C1₂ oder eine Verbindung, die in der Entladung ein oder mehrere Atome F, J, Br oder C1 abspaltet;
- ein Edelgas (Ar, He, Kr, Nr, Xe) oder Hg mit O₂ oder einer Verbindung, die in der Entladung ein oder mehrere O-Atome abspaltet;
- ein Edelgas (Ar, He, Kr, Ne, Xe) mit Hg.

Bei Anliegen einer Spannung zwischen den Elektroden 1,6 bildet sich eine Vielzahl von Entladungen aus. In dieser Entladung kann die Elektronenenergieverteilung durch Dicke der dielektrischen Platte 3 und deren Eigenschaften, Abstand der Platten 2 und 3, Druck und/oder Temperatur optimal eingestellt werden. Die Entladungen strahlen das UV-Licht (Pfeile 8) ab, das dann durch die transparente Platte 3 in einen unmittelbar an die mit Elektroden 6 versehene Platte angrenzenden Farbstoffkanal 9 dringt. Dieser Kanal ist auf der anderen Seite durch eine lichtdurchlässige Glasplatte 10 begrenzt, welche über Distanzstücke 11 von der Platte 3 beabstandet und gleichzeitig an ihr befestigt ist. Der Farbkanal 9 ist mit einer Flüssigkeit gefüllt. Typisch sind 10⁻⁵ - 10⁻³ molare Lösungen von Rhodaminen (z.B. Rhodamin 6G für die Wellenlänge 590 um), Coumarinen, DMT, TMQ etc., die aus der Lasertechnik bekannt sind und die effizient z.B. mit 308 nm- oder 254 nm-Strahlung gepumpt werden können.

Der beidseitig abstrahlende Flächenstrahler nach Fig. 1 erlaubt - ohne den Rahmen der Erfindung zu sprengen - eine Reihe von Modifikationen, die in den Figuren 1a und 1b stark schematisiert angedeutet sind:

Die Variante nach Fig. 1a zeigt einen Flächenstrahler mit einem zentralen Entladungsraum 5, der von zwei UV-transparenten dielektrischen Platten 12,13 begrenzt ist. Die Elektroden 14,15 sind hier in das Dielektrikum eingebettet und mit der Wechselstromquelle 7 verbunden. Beidseits der Platten 12,13 ist jeweils ein Farbkanal 9a, 9b angeordnet, der von jeweils einer transparenten Glasplatte 10a, 10b abgeschlossen ist.

Fig. 1b zeigt ebenfalls einen beidseitig abstrahlenden Flächenstrahler mit einem zentralen Entladungsraum 5, der von dielektrischen, UV-transparenten Platten 2a, 2b begrenzt ist. Die Platten 2a, 2b sind auf ihren dem Entladungsraum abgewandten Oberflächen je mit UV-durchlässigen, elektrisch leitenden Schichten 16, 17 versehen, die beispielsweise aus Zinkoxid, Indiumoxid oder extrem dünnen Metallen (z.B. wenige Angström dicke Goldschicht) bestehen. Die Farbkanäle 9a und 9b sind analog Fig. 1a durch transparente Glasplatten 10a, 10b abgeschlossen.

Die Füllgase im Entladungsraum 5 und die Substanz im Farbkanal 9a bzw. 9b entsprechen denen der Anordnung nach Fig. 1.

Die Varianten nach Fig. 1a und 1b ermöglichen Flächenstrahler, die - je nach Substanz in den beiden Farbkanälen - verschiedenfarbiges Licht nach der einen und anderen Seite abstrahlen.

Es versteht sich von selbst, dass auch bei einem Flächenstrahler nach Fig. 1 Elektroden eingesetzt werden können, wie sie in Fig. 1a oder 1b veranschaulicht sind.

Bei dem nach aussen abstrahlenden Zylinderstrahler nach Fig. 2 sind ein inneres Rohr 18 aus dielektrischem Material, z.B. Glas oder Quarz, ein mittleres Rohr 19 aus Glas und ein äusseres Rhr 20 ebenfalls aus Glas koaxial ineinander angeordnet. Die Innenseite des inneren Rohres 18 ist mit einer Metallschicht 21 versehen. Diese Metallschicht bildet die Hochspannungselektrode des Strahlers. Die Aussenfläche des mittleren Rohres 19 ist mit einer UV-transparenten Elektrode 22 in Gestalt eines Metalldrahtgitters versehen, welche die anderen Elektroden des Strahlers bildet. Der Ringraum 5 zwischen den beiden Rohren 18, 19 bildet den Entladungsraum des Strahlers. Er ist mit einem unter Entladungsbedingungen Strahlung aussendendem Gas bzw. Gasgemisch gefüllt, wobei die im Zusammenhang mit dem in Fig. 1 dargestellten Flächenstrahler aufgelisteten Füllgase verwendet werden können.

Der Ringraum zwischen dem mittleren 19 und äusseren Rohr 20 bildet den Farbkanal 9.

Auch bei dem Zylinderstrahler sind Abwandlungen analog Fig. 1 möglich, insbesondere hinsichtlich Gestaltung und Anordnung der Elektroden (Elektroden 21,22 als Drahtgitter bzw. Schicht, Elektroden im Rohrmaterial umgebettet, etc.). Wesentlich dabei ist nur, dass das mittlere Rohr 19 und die zugehörige Elektrode 22 für UV-Strahlung transparent sind.

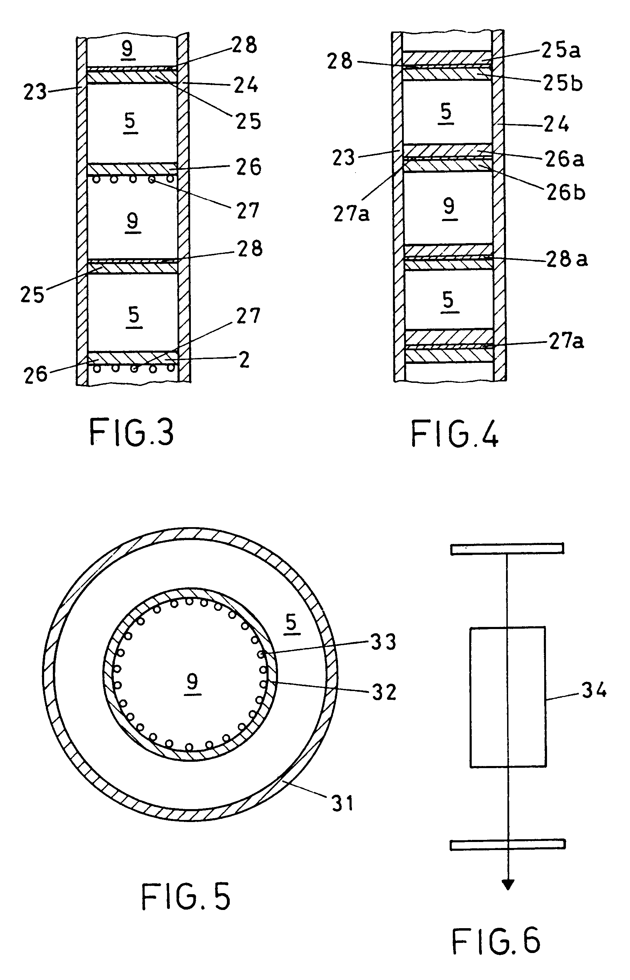

In Fig. 3 und 4 sind Flächenstrahler mit hinter- bzw. nebeneinanderliegenden Strahler-Elementen beispielshaft veranschaulicht. In Strahlerlängsrichtung folgt jeweils ein (UV-) Entladungsraum 5 einem Farbkanal 9, die auf der Flachseite von je einer Glasplatte 23 bzw. 24 begrenzt sind. Entladungsräume 5, und Farbkanäle 9 sind jeweils durch transparente Querwände 25, 26 getrennt. In Fig. 3 liegen jeweils beide Elektroden 27, 28 im Farbkanal 9, während in Fig. 4 die Elektroden 29, 30 innerhalb der hier doppellagig ausgeführten Querwände 25a, 25b bzw. 26a, 26b angeordnet sind.

Es können praktisch beliebig viele Strahlerelemente zu "Ketten" hintereinander geschaltet und zu beliebigen Gebilden, z.B. Buchstaben, Ziffern, Symbolen "verkettet" werden können. Ein jedes Element besteht aus einem Teil, der das Pumplicht liefert (UV), sowie aus einem Teil, der den Farbstoff (FS) enthält. Die Emission des Pumplichts durch das Dielektrikum und die transparenten Elektroden (z.B. Gitterdrähte) regt den Farbstoff an, der in alle Richtungen also auch senkrecht zur Pumprichtung sichtbares Licht abstrahlt. Versionen, bei denen eine Elektrode im Gasraum, die andere eingebettet ist. o.ä. sind ebenfalls denkbar.

Durch Einleiten verschiedener Farbstoffe kann die Farbe (Emissionswellenlänge) gewechselt werden. Durch entsprechende elektrische Beschaltung ist Pulsbetrieb möglich.

So kann die benötigte Spannung von verschiedener Frequenz sein (z.B. einige Hertz bis Megahertz). Einzelne Zellen einer Kette können zu verschiedenen Zeiten ein- und ausgeschaltet werden. Auf diese Weise erreicht man z.B. ein Blinken oder Aufleuchten einer bestimmten Kettenkonfiguration, beispielsweise in Gestalt eines Zeichens oder eines Symbols.

Die Fig. 5 und 6 schliesslich zeigen die Verwendung eines nach innen strahlenden Zylinderstrahlers als Pumplichtquelle für einen Farbstofflaser. Fig.5 zeigt einen Querschnitt durch die Pumpkammer eines möglichen Lasers. Es wird z.B. die in der Laserliteratur beschriebene Form des "Innenstrahlers" verwendet, die zu koaxialem Pumpen des Farbstoffs führt.

Sie besteht aus einem äusseren Metallrohr 31, das die eine Elektrode des Strahlers bildet und einem koaxial dazu angeordneten inneren Rohr 32 aus dielektrischem Material, z.B. Quarz. Der Ringraum 5 zwischen den beiden Rohren bildet den Entladungsraum. An der Innenfläche des inneren Rohres 32 ist eine transparente Elektrode 33, im Beispielsfall ein Gitternetz angeordnet. Der Innenraum des Rohres ist mit einer Flüssigkeit gefüllt, die Farbstoffe enthält.

Durch die transparente Elektrode 33 (Gitternetz im Farbstoffkanal, aufgedampfte Elektrode oder ins Dielektrikum 32 eingegossene transparente Elektrode) erreicht das benötigte Pumplicht den Farbstoff. Bei Betrieb mit hochfrequenten sinusförmigen Strömen (z.B. 200kHz) erreicht man nahezu CW-Emission ("Quasi"-Dauerstrich), bei rechteckförmigem Strom Pulsbetrieb. Die Repetitionsrate ist hierbei nicht elektrisch begrenzt und kann sehr hoch sein, weil man die Periodendauer des Stromes entsprechend wählen kann.

Eine vollständige Resonatoranordnung besteht (wie aus Standardtextbüchern der Laserphysik zu entnehmen) aus der beschriebenen Pumpkammer sowie optischen Bauteilen wie Spiegeln, Prismen, Gittern o.ä (Fig.6). Sie ist in Fig. 6 stark vereinfacht dargestellt. Zwischen einem zu 100 % reflektierendem Spiegel 35 und einem teilweise transmittierendem Spiegel 36 liegt die Pumpkammer 34.

Die besonderen Vorteile der Erfindung stellen sich zusammengefasst wie folgt dar:
Für die Laseranwendungen:
- Kostenersparnis für gepulste Anwendungen, weil kein Excimerlaser als Pumpquelle benötigt wird
- Kostenersparnis bei Quasi-CW-Betrieb
- hoher Wirkungsgrad, der von dem Hochleistungs-UV-Strahler bekannt ist,
- die bevorzugte koaxiale Pumpanordnung (s.Abb.4) wird einfach realisiert,
- lange Verstärkungswege (gepumpte Farbstofflänge) möglich, d.h. einfache Hochskalierung der Emission zu höheren Leistungen,
- hohe Repetitionsrate bei gepulsten Anordnungen (keine wesentliche Begrenzung durch die Entladung),
Für Beleuchtungszwecke:
- verschiedene Farben möglich, - elektrisch ansteuerbare Leuchtflächen (Schrift, flacher Bildschirm, etc.),
- verschiedenste Abmessungen möglich ( < mm-Dimensionen bis > m-Dimensionen),
- verschiedene Anordnungen (auch 3-dimensional) möglich,
- hoher Wirkungsgrad, der von dem Hochleistungs-UV-Strahler bekannt ist.

## Patentansprüche

1. Hochleistungsstrahler, insbesondere für sichtbares Licht, mit einem mit Füllgas gefülltem Entladungsraum, wobei das Füllgas unter Einfluss von stillen elektrischen Entladungen Strahlung aussendet, dessen Entladungsraum von Wänden begrenzt ist, von denen die eine durch ein erstes Dielektrikum gebildet ist, welche eine Wand auf ihrer dem Entladungsraum abgewandten Oberfläche mit einer ersten Elektrode versehen ist, die andere Wand des Entladungsraums mit einer zweiten Elektrode versehen ist oder selbst als Elektrode ausgebildet ist, mindestens eine Wand und die ihr zugeordnete Elektrode strahlungsdurchlässig sind und mit einer an die beiden Elektroden angeschlossenen Wechselstromquelle zur Speisung der Entladung, dadurch gekennzeichnet, dass der Entladungsraum (5) zumindest auf einer Seite an einen Farbstoffkanal (9) angrenzt, der mit einem in einem Gas oder einer Flüssigkeit dispergierten, suspendierten oder gelösten Farbstoff erfüllt ist.

2. Hochleistungsstrahler nach Anspruch 1, dadurch gekennzeichnet, dass Entladungsraum (5) und Farbstoffkanal von ebenen Platten (2,3,10) begrenzt sind, wobei die dem Entladungsraum (5) zugewandte Platte (3) für die im Entladungskanal erzeugte Strahlung transparent und die dem Farbstoffkanal (9) nach aussen abschliessende Platte (10) für die im Farbstoffkanal erzeugte Strahlung durchlässig ist.

3. Hochleistungsstrahler nach Anspruch 1, dadurch gekennzeichnet, dass Entladungsraum (5) und Farbstoffkanal (9) Ringräume zwischen koaxialen Rohren (18, 19, 20) sind.

4. Hochleistungsstrahler nach Anspruch 3, dadurch gekennzeichnet, dass das mittlere Rohr (19) für die im Entladungsraum (5) erzeugte Strahlung transparent ist und das andere den Farbstoffkanal (9) begrenzende Rohr für die im Farbstoffkanal (9) entstehende Strahlung durchlässig ist.

5. Hochleistungsstrahler nach Anspruch 1, dadurch gekennzeichnet, dass der Entladungsraum (5) der Ringraum zwischen zwei koaxialen Rohren (31, 32) ist und der Farbstoffkanal (9) durch den Innenraum des inneren Rohres (32) gebildet ist.

6. Hochleistungsstrahler nach Anspruch 2, dadurch gekennzeichnet, dass an einen mittleren Entladungsraum (5) beidseitig Farbstoffkanäle (9a, 9b) angrenzen, wobei die den Entladungsraum (5) begrenzenden Wände mit Elektroden (14, 15; 16, 17) versehen und ebenso wie die Elektroden für die im Entladungsraum (5) erzeugte Strahlung transparent sind, während die die Farbstoffkanäle nach aussen begrenzenden Wände (10a, 10b) für die im Farbstoffkanal (9) erzeugte Strahlung durchlässig sind.

7. Hochleistungsstrahler nach Anspruch 6, dadurch gekennzeichnet, dass Entladungsraum (5) und Farbstoffkanal (9) seitlich durch transparente Platten (23, 24) und gegeneinander durch mit Elektroden (27, 28; 27a, 28a) versehene Trennwände (25, 26; 25a, 26a, 26b) getrennt sind.

## Claims

1. A high-power radiator, in particular for visible light, having a discharge space filled with filler gas, the filler gas emitting radiation under the influence of dark electrical discharges, the discharge space of which is delimited by walls, one of said walls being formed by a first dielectric and being provided on its surface remote from the discharge space with a first electrode, and the other wall of the discharge space being provided with a second electrode or being itself designed as an electrode, at least one wall and its associated electrode being transmissive to radiation, and having an alternating-current source connected to the two electrodes for the power supply for the discharge, wherein the discharge space (5) adjoins at least on one side a dye channel (9) which is filled with a dye dispersed, suspended or dissolved in a gas or in a liquid.

2. A high-power radiator as claimed in claim 1, wherein discharge space (5) and dye channel are delimited by flat sheets (2, 3, 10), the sheet (3) facing the discharge space (5) being transparent to the radiation generated in the discharge channel and the sheet (10) closing off the dye channel (9) to the outside being transmissive to the radiation generated in the dye channel.

3. A high-power radiator as claimed in claim 1, wherein discharge space (5) and dye channel (9) are annular spaces between coaxial tubes (18, 19, 20).

4. A high-power radiator as claimed in claim 3, wherein the central tube (19) is transparent to the radiation generated in the discharge space (5), and the other tube delimiting the dye channel (9) is transmissive to the radiation produced in the dye channel (9).

5. A high-power radiator as claimed in claim 1, wherein the discharge space (5) is the annular space between two coaxial tubes (31, 32), and the dye channel (9) is formed by the interior of the inner tube (32).

6. A high-power radiator as claimed in claim 2, wherein dye channels (9a, 9b) adjoin either side of a central discharge space (5), the walls delimiting the discharge space (5) being provided with electrodes (14, 15; 16, 17) and like the electrodes being transparent to the radiation generated in the discharge space (5), while the walls (10a, 10b) delimiting the dye channels to the outside are transmissive to the radiation generated in the dye channel (9).

7. A high-power radiator as claimed in claim 6, wherein discharge space (5) and dye channel (9) are separated laterally by transparent sheets (23, 24) and from one another by partitions (25, 26; 25a, 26a, 26b) provided with electrodes (27, 28; 27a, 28a).

## Revendications

1. Radiateur à grand rendement, essentiellement pour lumière visible, avec un espace de décharge rempli de gaz de remplissage, le gaz de remplissage émettant, sous l'influence d'effets corona, une radiation, dont l'espace de décharge est limité par des parois, dont l'une est formée par un premier diélectrique et est munie sur sa surface opposée à l'espace de décharge d'une première électrode, l'autre paroi de l'espace de décharge étant munie d'une deuxième électrode ou réalisée elle-même comme électrode, au moins une paroi et l'électrode qui lui est affectée étant perméable à la radiation et avec une source de courant alternatif branchée sur les deux électrodes pour l'alimentation de la décharge, caractérisé en ce que l'espace de décharge (5) est adjacent au moins d'un côté à un canal à colorant (9) rempli d'un colorant dispersé, suspendu ou dissout dans un gaz ou un liquide.

2. Radiateur à grand rendement selon la revendication 1, caractérisé en ce que l'espace de décharge (5) et le canal à colorant sont limités par des plaques (2,3,10) planes, la plaque (3) adjacente à l'espace de décharge (5) étant transparente pour la radiation générée dans le canal de décharge et la plaque (10) obturant vers l'extérieur le canal à colorant (9) étant perméable pour la radiation générée dans le canal à colorant.

3. Radiateur à grand rendement selon la revendication 1, caractérisé en ce que l'espace de décharge (5) et le canal à colorant (9) sont des espaces annulaires entre des tubes coaxiaux (18, 19, 20).

4. Radiateur à grand rendement selon la revendication 3, caractérisé en ce que le tube médian (19) est transparent pour la radiation générée dans l'espace de décharge (5) et l'autre tube limitant le canal à colorant (9) est perméable pour la radiation se produisant dans le canal à colorant (9).

5. Radiateur à grand rendement selon la revendication 1, caractérisé en ce que l'espace de décharge (5) est l'espace annulaire entre deux tubes coaxiaux (31, 32) et le canal à colorant (9) est formé par l'espace intérieur du tube intérieur.

6. Radiateur à grand rendement selon la revendication 2, caractérisé en ce que des canaux à colorants (9a, 9b) sont adjacents des deux côtés à un espace de décharge médian (5), l'espace de décharge (5) étant limité par des parois munies d'électrodes (14, 15 ; 16, 17) et qui sont, de même que les électrodes, transparents pour la radiation générée dans l'espace de décharge (5), alors que les parois (10a, 10b) limitant les canaux à colorant vers l'extérieur sont perméables à la radiation générée dans le canal à colorant (9).

7. Radiateur à grand rendement selon la revendication 6, caractérisé en ce que l'espace de décharge (5) et le canal à colorant (9) sont séparés latéralement par des plaques transparentes (23, 24) et l'un par rapport à l'autre par des parois de séparation (25, 26 ; 25a, 26a, 26b) munies d'électrodes (27, 28 ; 27a, 28a).
